# EUROPEAN PATENT SPECIFICATION

(11) **EP 2 864 775 B1**
(45) Date of publication and mention of the grant of the patent: **22.02.2017**
(21) Application number: 13806536.2
(22) Date of filing: 18.06.2013
(51) Int. Cl.: G01N 30/56, B01D 15/20, F16K 31/52, F16K 35/02, F16K 1/32

(54) **CHROMATOGRAPHY COLUMN NOZZLE**
CHROMATOGRAFIESÄULENDÜSE
BUSE DE COLONNE DE CHROMATOGRAPHIE

(30) Priority: 21.06.2012 US 201213528973; 21.11.2012 US 201213683199
(43) Date of publication of application: 29.04.2015
(73) Proprietor: GE Healthcare Bio-Sciences AB, 75184 Uppsala (SE)
(72) Inventor: USELIUS, Per, S-752 67 Uppsala (SE)
(74) Representative: Cavill, Ross David
(86) International application number: PCT/SE2013/050714
(87) International publication number: WO 2013/191631

(56) References cited:
- EP-A1- 0 330 633
- EP-A1- 0 950 186
- WO-A1-98/34708
- GB-A- 624 404
- US-A- 5 902 485
- US-A1- 2004 164 012

## Description

### Field of the Invention

The present invention relates to a nozzle assembly provided on a chromatography column.

### Background of the Invention

Chromatography columns are typically comprised of a column tube with a top end cell covering the top opening of the tube and a bottom end cell covering the bottom opening of the tube. A chromatography column with variable column height also comprises a plunger or adaptor integrated in the top end cell, which adaptor can be moved to different heights within the column tube. The top end cell (possibly integrated with an adaptor) and bottom end cell comprise further a nozzle assembly adapted to provide chromatography media to the column, sample inlet/outlet, sample distribution means, filter, net, O-rings and seals. The nozzle assembly comprises typically a nozzle tube through which chromatography media in the form of a slurry is provided to the column. The nozzle assembly comprises further normally a slurry outlet used during the unpacking of the column. In US5902485 an access valve suitable for controlling fluid flow into and out of a chromatography column is described. Axial movement of the probe, also known as a nozzle tube, adjusts the valve between a fully open condition, in which both a first conduit extending through the probe and a second conduit defined around the probe are open to the column interior, and a partly open condition in which a sealing component of the probe closes the second conduit. Also further axial movement of the probe provides a fully closed position in which both conduits are closed. The partly open position is useful for packing chromatography media into its column while the third position is useful for unpacking the same.

The movement of the probe into the three different positions is crucial and important. In prior art this is sometimes difficult and not very exact. Some solutions are also rather expensive and require complicated mechanics. In US 5902485 one possible way of performing this is shown. In this described system the axial movement of the nozzle tip is performed by use of a screwing mechanism which will not provide very exact positions.

### Summary of the Invention

An object of the invention is to provide a means for facilitating the controlling of the nozzle tube.

A further object of the invention is to provide an accurate and easy to handle means for controlling the positions of the nozzle tube.

A further object of the invention is to provide a cheap solution comprising few parts for the controlling of the nozzle tube.

A further object of the invention is to improve accuracy of the nozzle tube positions and to improve convenience for the operator during operation.

This is achieved in a nozzle assembly according to claim 1.

Hereby, a nozzle assembly is achieved providing at least two easily entered distinct positions for the nozzle tube. The nozzle assembly comprises few parts and is cheap to produce. The nozzle tip will be provided in exact positions and the operator needs not to do any further adjustments or controlling to adjust position.

Suitable embodiments are described in the dependent claims.

### Brief Description of the Drawings

Figure 1 shows one embodiment of a nozzle assembly provided on a chromatography column according to the invention.
Figures 2a-2b shows the same nozzle assembly as in Figure 1 in more detail and in two different angles.
Figure 3 shows in cross section another view of the nozzle assembly.
Figures 4a-4c shows the same nozzle assembly as in Figure 1 in cross section in the three different positions according to the invention.

### Detailed Description of the Invention

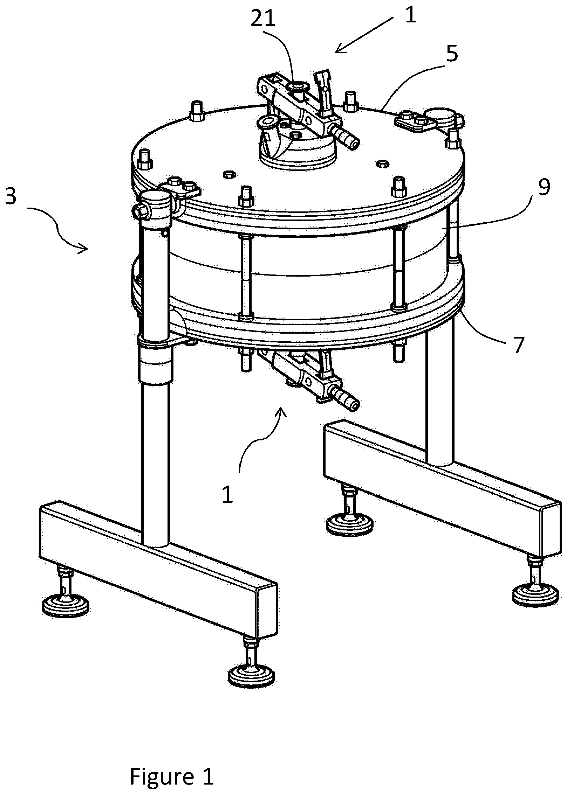

Figure 1 shows one embodiment of a nozzle assembly 1 provided on a chromatography column 3 according to the invention. Actually one nozzle assembly 1 according to the invention is provided on a top end cell 5 of the chromatography column 3 and another nozzle assembly 1 according to the invention is provided on a bottom end cell 7 of the chromatography column 3. A column tube 9 is provided in between the top end cell 5 and the bottom end cell 7. Here a chromatography column without movable adaptor is shown. The invention is however also applicable to a chromatography column having a movable adaptor.

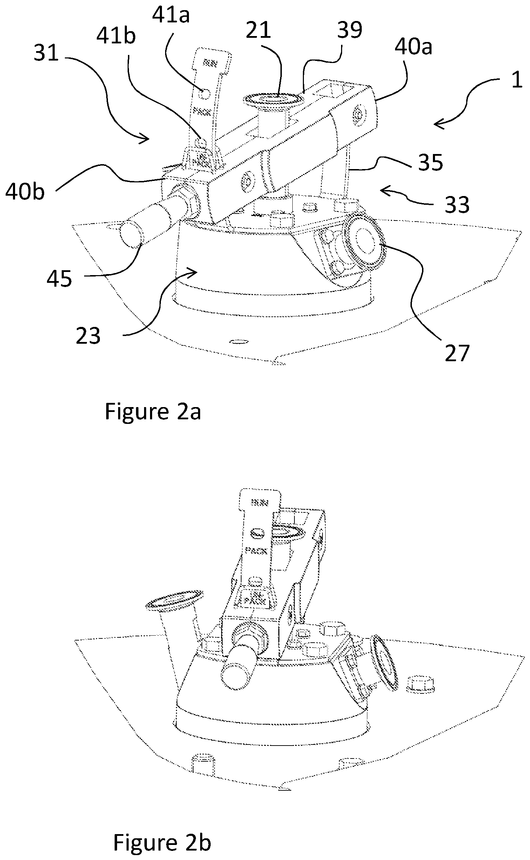

The nozzle assembly 1 comprises a nozzle tube 21 protruding through the top or bottom end cell 5, 7. Chromatography media in the form of a slurry is to be entered into the column 9 through the nozzle tube 21. The nozzle assembly 1 comprises further controlling means 31 for controlling the nozzle tube 21 to protrude into the column or not. This will be further described in relation to Figures 2 - 4.

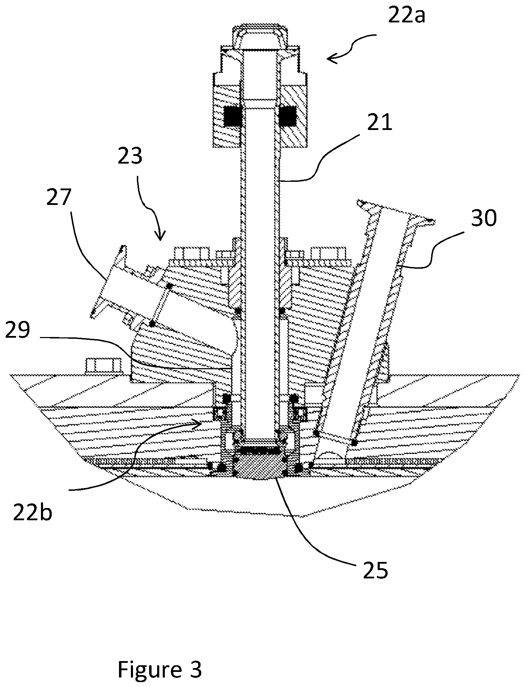

Figures 2a-2b shows the same nozzle assembly 1 as in Figure 1 in more detail and in two different angles. The nozzle assembly 1 comprises a nozzle body 23 through which the nozzle tube 21 protrudes into the column. This can be seen in Figure 3. The nozzle tube 21 is elongated and comprises a first end 22a pointing out from the chromatography column when the nozzle assembly 1 is attached to the chromatography column and a second end 22b entering into the column tube 9 in at least one of its positions, said second end 22b comprising a nozzle tip 25 through which chromatography media slurry is to be provided into the column.

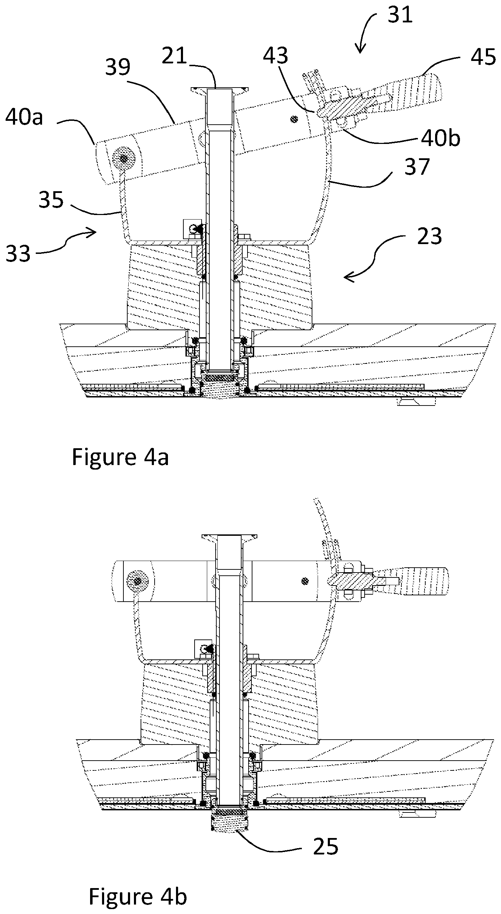

The nozzle assembly further comprises a slurry outlet 27. The slurry outlet 27 protrudes through the nozzle body 23, whereby the angle between the nozzle tube 21 and the slurry outlet 27 is more than 0 degrees and less than 90 degrees. Inside the nozzle body 23 the slurry outlet 27 hits the nozzle tube 21 and at that point the slurry outlet 27 enters into a second part 29 of the slurry outlet that is surrounding the second end 22b of the nozzle tube 21. The second part 29 of the slurry outlet is connected to one part of the nozzle tip 25. This will be further described in relation to Figures 4a-4c.

In this embodiment a mobile phase inlet 30 is provided separate from the nozzle tube 21. However the mobile phase inlet 30 protrudes through the nozzle body 23 but is separated from the nozzle tube 21 and the slurry outlet 27. This is suitable because it will provide a more simple construction requiring less O-rings and thereby being less susceptible to leakage compared to a solution where the mobile phase inlet is centred around the nozzle tube.

The nozzle assembly 1 comprises further a controlling means 31 for controlling the nozzle tube 21 to protrude into the column or not. This controlling means 31 comprises in one embodiment of the invention a pivot base plate 33 attached to the nozzle body 23. The nozzle tube 21 is protruding through essentially the center of the pivot base plate 33. Said pivot base plate 33 comprises at opposite sides of its periphery two essentially perpendicularly extending arms, one arm being a pivot point arm 35 to which a first end 40a of a pivot 39 is permanently secured and the other arm being a pivot positions arm 37 to which a second end 40b (the opposite to the first end 40a) of the pivot 39 can be attached in at least two different locked pivot positions. The pivot positions arm 37 comprises in this shown embodiment three holes 41a, 41b, 41c into which a spring loaded pin 43 controlled by a handle 45 provided at the second end 40b of the pivot 39 can be introduced and thereby locking the pivot 39 in one of the three positions.

The nozzle tube 21 is connected to the pivot 39 at about the middle of the pivot. Hereby the nozzle tip 25 is displaced into three different nozzle tip positions corresponding to the three different pivot positions. These three nozzle tip positions will be further described in relation to Figures 4a-4c below.

The pivot base plate is in this shown embodiment provided as one piece comprising the two arms 35, 37 - see Figure 4a. However an alternative would be to attach two separate arms to the nozzle body 23. Furthermore, the pivot point arm 35 could be provided as adjustable in axial direction in order to further improve the precision for the positioning of the nozzle tip.

Figures 4a-4c shows the same nozzle assembly as in Figure 1 in cross section in the three different positions according to the invention. A run position is shown in Figure 4a. This position is used during chromatography when neither the nozzle tube 21 nor the slurry outlet 27 should communicate with the column interior. In this position the nozzle tip 25 is in its most retracted position, i.e. not protruding into the column. Seals are provided around the nozzle tip such that there is no opening between the column and the nozzle tube. The run position corresponds to the handle and the spring loaded pin 43being in its uppermost position with the pin 43 locked in the uppermost hole 41a (referring up as a direction in the Figure 4a. However the nozzle assembly is also provided in the opposite direction at the bottom part of the column).

A pack position is shown in Figure 4b. In this position the nozzle tip 25 is partly introduced inside the column. This position corresponds to the handle 45 and the spring loaded pin 43 being in the middle position, i.e. the spring loaded pin 43 locked in the middle hole 41b. In this position the nozzle tip 25 prevents any connection between the column interior and the slurry outlet 27 and admits communication between the column interior and the nozzle tube 21. Hereby slurry can be introduced through the nozzle tube 21 into the column.

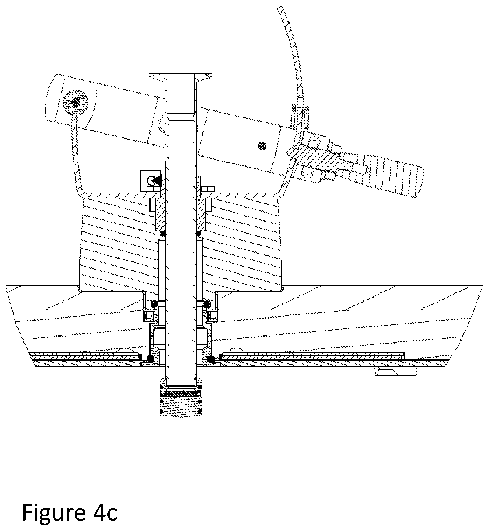

An unpack position is shown in Figure 4c. In this position the nozzle tip 25 is completely introduced inside the column. This corresponds to the handle 45 and the spring loaded pin 43 being in its lowermost position and the spring loaded pin 43 being locked in the lowermost hole 41c (referring to directions in the drawing). In this position the nozzle tip 25 admits a connection between the column interior and the slurry outlet as well as a connection between the nozzle tube 21 and the column interior. Hereby slurry can be withdrawn through the slurry outlet 27 and the column can be unpacked.

Even though the present invention has been described above in terms of specific embodiments, many modification and variations of this invention can be made as will be obvious to those skilled in the art, without departing from its spirit and scope as set forth in the following claims.

## Claims

1. A nozzle assembly (1) provided in a chromatography column (3), said nozzle assembly comprising a nozzle tube (21) through which chromatography media slurry is to be provided to the column (3), **characterized in that** said nozzle assembly (1) further comprises a pivot (39) connected in a first end (40a) to a pivot point arm (35), said pivot (39) can be pivoted into at least two different locked pivot positions and said pivot (39) being connected to the nozzle tube (21) such that a nozzle tip (25) of said nozzle tube is adjusted into at least two different locked nozzle tip positions corresponding to the at least two different locked pivot positions.

2. A nozzle assembly according to claim 1, **characterized in that** said nozzle tube (21) is elongated and comprises a first end (22a) pointing out from the chromatography column (3) when the nozzle assembly (1) is attached to the chromatography column and a second end (22b) entering into the column (3) in at least one of said pivot positions, said second end (22b) comprising the nozzle tip (25) through which chromatography media slurry is to be provided into the column.

3. A nozzle assembly according to claim 2, **characterized in that** it further comprises a slurry outlet (27) through which chromatography media can be removed from the chromatography column (3), said slurry outlet (27) at least partly surrounds the second end (22b) of the nozzle tube (21) and communicates with the nozzle tip (25).

4. A nozzle assembly according to claim 3, **characterized in that** said pivot (39) can be pivoted into three different locked pivot positions, thereby providing the nozzle tip (25) in corresponding three different locked nozzle tip positions, a run position which corresponds to the nozzle tip (25) being retracted from the column (3) and both nozzle tube (21) and slurry outlet (27) being closed towards the interior of the column (3), a pack position which corresponds to the nozzle tip (25) being partly introduced into the column (3) and thereby opening the connection to the nozzle tube (21) but not to the slurry outlet (27) and an unpack position which corresponds to the nozzle tip (25) being completely introduced into the column (3) and thereby opening the connection to both the nozzle tube (21) and the slurry outlet (27).

5. A nozzle assembly according to claim 1, **characterized in that** it further comprises a pivot base plate (33) attached to a nozzle body (23) which is provided around a part of the nozzle tube (21) and the slurry outlet (27) and is attached to the column (3), said pivot base plate (33) comprising at opposite sides of its periphery two essentially perpendicularly extending arms (35, 37), one arm being the pivot point arm (35) to which a first end (40a) of the pivot (39) is permanently secured and the other arm being a pivot positions arm (37) to which a second end (40b) of the pivot (39) can be attached in at least two different locked positions.

6. A nozzle assembly according to claim 5, **characterized in that** the pivot positions arm (37) comprises three holes (41a, 41b, 41c) into which a spring loaded pin (43) controlled by a handle (45) provided at the second end (40b) of the pivot (39) can be introduced and thereby locking the pivot (39) in one of the three positions.

7. A nozzle assembly according to claim 1, **characterized in that** the nozzle tube (21) is connected to the pivot (39) at about the middle of the pivot.

## Patentansprüche

1. Düsenanordnung (1), die in einer Chromatographiesäule (3) zur Verfügung gestellt ist, wobei die Düsenanordnung ein Düsenrohr (21) umfasst, durch das der Säule (3) eine Chromatographiemediumaufschlämmung bereitgestellt wird, **dadurch gekennzeichnet, dass** die Düsenanordnung (1) ferner ein Drehgelenk (39) umfasst, das an einem ersten Ende (40a) mit einem Drehpunktarm (35) verbunden ist, wobei das Drehgelenk (39) in mindestens zwei unterschiedliche verriegelte Drehpositionen geschwenkt werden kann und das Drehgelenk (39) mit dem Düsenrohr (21) derart verbunden ist, dass eine Düsenspitze (25) des Düsenrohrs in mindestens zwei unterschiedliche verriegelte Düsenspitzenpositionen, die mindestens zwei unterschiedlichen verriegelten Schenkpositionen entsprechen, angepasst wird.

2. Düsenanordnung nach Anspruch 1, **dadurch gekennzeichnet, dass** das Düsenrohr (21) verlängert ist und ein erste Ende (22a) umfasst, das von der Chromatographiesäule (3) herauszeigt, wenn die Düsenanordnung (1) an der Chromatographiesäule befestigt ist, und ein zweites Ende (22b) umfasst, das in mindestens einer der Drehpositionen in die Säule (3) eintritt, wobei das zweite Ende (22b) die Düsenspitze (25) umfasst, durch welche der Säule eine Chromatographiemediumaufschlämmung zur Verfügung gestellt werden soll.

3. Düsenanordnung nach Anspruch 2, **dadurch gekennzeichnet, dass** sie ferner einen Aufschlämmungsauslass (27) umfasst, durch welchen Chromatographiemedien aus der Chromatographiesäule (3) entfernt werden können, wobei der Aufschlämmungsauslass (27) das zweite Ende (22b) des Düsenrohrs (21) mindestens teilweise umgibt und die Düsenspitze (25) berührt.

4. Düsenanordnung nach Anspruch 3, **dadurch gekennzeichnet, dass** das Drehgelenk (39) in drei unterschiedliche verriegelte Drehpositionen geschwenkt werden kann, wodurch die Düsenspitze (25) in entsprechenden drei unterschiedlichen verriegelten Spitzenpositionen zur Verfügung gestellt wird, einer Laufposition, die der Düsenspitze (25) entspricht, wenn sie von der Säule (3) zurückgezogen ist und wobei sowohl Düsenrohr (21) und Aufschlämmungsauslass (27) in Richtung des Inneren der Säule (3) geschlossen sind, einer Beladungsposition, die der Düsenspitze (25) entspricht, wenn sie teilweise in die Säule (3) eingeführt ist, und dabei die Verbindung zum Düsenrohr (21) aber nicht zum Aufschlämmungsausgang (27) öffnet, und einer Entladeposition, die der Düsenspitze (25) entspricht, wenn sie vollständig in die Säule (3) eingeführt ist und dabei die Verbindung sowohl zum Düsenrohr (21) als auch zum Aufschlämmungsauslass (27) öffnet.

5. Düsenanordnung nach Anspruch 1, **dadurch gekennzeichnet, dass** sie ferner eine Drehgelenkbasisplatte (33) umfasst, die an einem Düsenkörper (23) befestigt ist, der um einen Teil des Düsenrohrs (21) und des Aufschlämmungsauslasses (27) zur Verfügung gestellt ist und an der Säule (3) befestigt ist, wobei die Drehgelenkbasisplatte (33) an gegenüberliebenden Seiten ihrer Peripherie zwei sich im Wesentlichen perpendikulär erstreckende Arme (35, 37) aufweist, wobei ein Arm der Drehgelenkpunktarm (35) ist, an dem ein erstes Ende (40a) des Drehgelenks (39) permanent gesichert ist, und der andere Arm ein Drehgelenkpositionsarm (37) ist, an welchem ein zweites Ende (40b) des Drehgelenks (39) in mindestens zwei unterschiedlichen verriegelten Positionen befestigt werden kann.

6. Düsenanordnung nach Anspruch 5, **dadurch gekennzeichnet, dass** der Drehgelenkpositionsarm (37) drei Löcher (41a, 41b, 41c) umfasst, in welche ein durch eine Feder vorgespannter Stift (43), der durch einen Griff (45) gesteuert wird, die an dem zweiten Ende (40b) des Drehgelenks (39) zur Verfügung gestellt ist, eingeführt werden kann und dabei das Drehgelenk (39) in einer der drei Positionen verriegelt.

7. Düsenanordnung nach Anspruch 1, **dadurch gekennzeichnet, dass** das Düsenrohr (21) mit dem Drehgelenk (39) etwa in der Mitte des Drehgelenks verbunden ist.

## Revendications

1. Ensemble de buse (1) agencé dans une colonne chromatographique (3), ledit ensemble de buse comprenant un tube de buse (21) à travers lequel une suspension d'agents chromatographiques doit être fournie à la colonne (3), **caractérisé en ce que** ledit ensemble de buse (1) comprend en outre un pivot (39) raccordé, à une première extrémité (40a), à un bras point de pivotement (35), ledit pivot (39) peut être soumis à un pivotement dans au moins deux positions de pivotement verrouillées différentes et ledit pivot (39) étant raccordé au tube de buse (21) de sorte qu'un embout de buse (25) dudit tube de buse soit ajusté dans au moins deux positions d'embout de buse verrouillées différentes correspondant aux au moins deux positions de pivotement verrouillées différentes.

2. Ensemble de buse selon la revendication 1, **caractérisé en ce que** ledit tube de buse (21) est allongé et comprend une première extrémité (22a) pointant hors de la colonne chromatographique (3) lorsque l'ensemble de buse (1) est fixé à la colonne chromatographique et une seconde extrémité (22b) pénétrant dans la colonne (3) dans au moins l'une desdites positions de pivotement, ladite seconde extrémité (22b) comprenant l'embout de buse (25) à travers lequel la suspension d'agents chromatographiques doit être introduite dans la colonne.

3. Ensemble de buse selon la revendication 2, **caractérisé en ce qu'**il comprend en outre une sortie de suspension (27) à travers laquelle les agents chromatographiques peuvent être retirés de la colonne chromatographique (3), ladite sortie de suspension (27) entourant au moins en partie la seconde extrémité (22b) du tube de buse (21) et communiquant avec l'embout de buse (25).

4. Ensemble de buse selon la revendication 3, **caractérisé en ce que** ledit pivot (39) peut pivoter dans trois positions de pivotement verrouillées différentes, en disposant de la sorte l'embout de buse (25) dans trois positions d'embout de buse verrouillées différentes correspondantes, une position opératoire qui correspond à l'embout de buse (25) qui est rétracté de la colonne (3) et à la fois le tube de buse (21) et la sortie de suspension(27) qui sont fermés vers l'intérieur de la colonne (3), une position de chargement qui correspond à l'embout de buse (25) qui est en partie introduit dans la colonne (3) et ouvre de ce fait le raccordement avec le tube de buse (21), mais pas avec la sortie de suspension (27), et une position de déchargement qui correspond à l'embout de buse (25) qui est complètement introduit dans la colonne (3) et ouvre de ce fait le raccordement avec à la fois le tube de buse (21) et la sortie de suspension (27).

5. Ensemble de buse selon la revendication 1, **caractérisé en ce qu'**il comprend en outre une plaque de base pivot (33) fixée à un corps de buse (23), qui est disposée autour d'une partie du tube de buse (21) et de la sortie de suspension (27) et est fixée à la colonne (3), ladite plaque de base pivot (33) comprenant sur les côtés opposés de sa périphérie deux bras (35, 37) qui s'étendent de manière sensiblement perpendiculaire, un bras état le bras de point de pivotement (35) auquel une première extrémité (40a) du pivot (39) est fixée en permanence et l'autre bras étant un bras de position de pivotement (37) auquel une seconde extrémité (40b) du pivot (39) peut être fixée dans au moins deux positions verrouillées différentes.

6. Ensemble de buse selon la revendication 5, **caractérisé en ce que** le bras de position de pivotement (37) comprend trois trous (41a, 41b, 41c) dans lesquels une broche (43) sollicitée par un ressort et commandée par une poignée (45) prévue à la seconde extrémité (40b) du pivot (39) peut être introduite en bloquant de la sorte le pivot (39) dans l'une des trois positions.

7. Ensemble de buse selon la revendication 1, **caractérisé en ce que** le tube de buse (21) est raccordé au pivot (39) à peu près au centre du pivot.
